# EUROPÄISCHE PATENTSCHRIFT

(11) **EP 0 409 013 B1**
(45) Veröffentlichungstag und Bekanntmachung des Hinweises auf die Patenterteilung: **03.11.1993**
(21) Anmeldenummer: 90112925.4
(22) Anmeldetag: 06.07.1990
(51) Int. Cl.: G01M 17/00, G01M 13/00

(54) **Verfahren und Vorrichtung zum Messen von Abgaswerten bei Kraftfahrzeugen**
Vehicle exhaust gas measuring procedure and device
Procédé et dispositif de mesure concernant les gaz d'échappement de véhicules

(30) Priorität: 18.07.1989 DE 3923737
(43) Veröffentlichungstag der Anmeldung: 23.01.1991
(73) Patentinhaber: GUTMANN MESSTECHNIK AG, CH-6052 Hergiswil (CH)
(72) Erfinder: Gutmann, Kurt, D-7814 Breisach-Hochstetten (DE)
(74) Vertreter: Schmitt, Hans, Dipl.-Ing.

(56) Entgegenhaltungen:
- M.T.Z. MOTORTECHNISCHE ZEITSCHRIFT, Band 47, Nr. 5, Mai 1986, Seiten 173-178, Stuttgart, DE; L. COLLIN: "INCOLL - Ein neuer Lösungsweg zur Abgaskontrolle bei Kraftfahrzeugen - Teil 1"

## Beschreibung

Die Erfindung betrifft ein Verfahren and eine Vorrichtung zum Messen von Abgaswerten bei Kraftfahrzeugen mit geregeltem Drei-Wege-Katalysator und Lambdasonde.

Es ist bereits ein Abgastestverfahren bekannt, bei dem im Rahmen der sogenannten ASU-Messung der Kohlenmonoxidgehalt sowie gegebenenfalls der Kohlenwasserstoffgehalt gemessen werden. Dieses Meßverfahren ist jedoch wenig aussagekräftig. Insbesondere werden dabei nur Meßwerte im Stand bzw. Leerlauf des Fahrzeuges ermittelt.
Zur Messung bestimmter Giftstoffe, wie z. B. von Stickoxiden, muß der Fahrzeugmotor jedoch unter Last laufen. Dies wiederum erfordert in aufwendiger Weise einen Leistungs- oder Rollenprüfstand.

Für eine umfassendere Abgasmessung kennt man auch bereits eine Vorrichtung und ein Verfahren, wobei das von einem auf einem Rollenprüfstand befindlichen Fahrzeug während des Testzyklus ausgestoßene Abgas mit gefilterter Umgebungsluft in einem konstanten Mischverhältnis verdünnt wird. Ein Teil dieses Gemisches wird in Sammelbeuteln aufgefangen und später wird anhand des Gesamtvolumens und der Konzentration im Sammelbeutel die angefallenen Schadstoffmassen errechnet.
Insgesamt sind bei diesem Meßverfahren aufwendige Analysegeräte und Vorrichtungen sowie ein Rollenprüfstand erforderlich, so daß durch diesen notwendigen Aufwand der Einsatz auf wenige Großunternehmen beschränkt ist.

Aufgabe der vorliegenden Erfindung ist es, ein Verfahren und eine Vorrichtung zum Messen von Abgaswerten bei Kraftfahrzeugen zu schaffen, wobei die Abgas-Messungen sowohl im Stand- als auch im Fahrbetrieb möglich sind und wobei der Aufwand dazu vergleichsweise gering ist. Insbesondere sollen die dafür erforderlichen Meßeinrichtungen auch für kleinere Betriebe erschwinglich sein und die Messung soll auch ohne Rollenprüfstand durchführbar sein.

Zur Lösung dieser Aufgabe wird erfindungsgemäß vorgeschlagen, daß die von der Lambdasonde kommenden Meßwerte zumindest während eines Fahrzyklus in einem Datenspeicher abgespeichert werden und daß anschließend diese Daten zusammen mit weiteren, hinter dem Katalysator gemessenen Abgasdaten mit in einem Rechner abgelegten Abgas-Kenndaten des Fahrzeuges verglichen werden.
Durch Einbeziehung der schon am Fahrzeug vorhandenen Lambdasonde und den im Fahrzeug mitführbaren Datenspeicher können vorteilhafterweise auch während einer Testfahrt und somit unter Last, Abgas-Meßwerte vor dem Katalysator gemessen, gespeichert und später nach der Testfahrt ausgewertet werden. Der dazu notwendige apparative Aufwand ist hierbei vergleichsweise gering, da einerseits bereits vorhandene Einrichtungen - Lambdasonde - bzw. Meßgeräte - Abgastester - verwendet werden können und andererseits ist ein aufwendiger Rollenprüfstand nicht erforderlich.

Zweckmäßigerweise werden zunächst - mit einem Abgas-Testgerät - der Kohlenmonoxid-Gehalt sowie der Kohlenwasserstoff-Gehalt gemessen, wobei anschließend die dadurch ermittelten Meßdaten in den die Abgas-Kenndaten, insbesondere gemäß den Typ-Prüf-US FTP 75-Werten enthaltenden Rechner eingegeben werden und wobei schließlich diese Abgas-Meßdaten sowie die von der Lambdasonde gelieferten Meßdaten mit den Abgas-Kenndaten verglichen werden und die Abweichungen auf einen Datenträger übertragen, angezeigt und/oder ausgedruckt werden.

Durch diesen Meßablauf können die Abgaswerte vom Zeitpunkt des Kaltstartes einerseits bis die Lambdasonde und andererseits bis der Katalysator arbeitet, gemessen werden. Gleichzeitig wird in dieser Kaltlaufphase mit einem üblichen, in den meisten Kraftfahrzeugwerkstätten bereits vorhandenen Abgastester der Kohlenmonoxid- und der Kohlenwasserstoffanteil gemessen. Bei der anschließenden Probefahrt werden dann noch die von der Lambdasonde kommenden Meßwerte unter Last aufgenommen, wobei insbesondere der Stickoxidanteil erfaßt wird. Es stehen somit nach dem Testdurchlauf umfassende und praktisch jeden Betriebszustand des Motors erfassende Meßdaten zur Verfügung, die eine sehr genaue Beurteilung insbesondere auch des Wirkungsgrades des Katalysators zulassen. Für die gesamte Messung kann dabei auf Meßgeräte zurückgegriffen werden, die in der Regel vorhanden sind oder nur einen geringen Aufwand bei der Beschaffung verursachen.

Die Erfindung betrifft auch eine Vorrichtung zur Abgasmessung an Kraftfahrzeugen mit geregelten Drei-Wege-Katalysator, insbesondere zum Überprüfen des Katalysatorwirkungsgrades. Diese Vorrichtung weist wenigstens einen während der Messung an die Lambdasonde angeschlossenen Datenspeicher sowie einen mit diesem verbundenen oder verbindbaren Rechner mit darin eingespeicherten, typengebundenen Abgas-Kenndaten auf, weiterhin mit einem der Vorrichtung zugeordneten, an sich bekannten Abgastester zur Messung des Kohlenmonoxid- und des Kohlenwasserstoff-Gehaltes.
Wie bereits vorerwähnt, ergibt sich dadurch der besondere Vorteil, daß auch während der Fahrt und somit unter Last Abgas-Daten aufgenommen und gespeichert werden können, die anschließend nach der Probefahrt ausgewertet werden können.

Zusätzliche Ausgestaltungen der Erfindung sind in den weiteren Unteransprüchen aufgeführt. Nachstehend ist die Erfindung anhand der Zeichnungen noch näher erläutert.

Es zeigt:
- Fig. 1: ein an eine erfindungsgemäße Abgas-Testvorrichtung angeschlossenes Kraftfahrzeug und
- Fig. 2: ein Fahrzeug mit an die Lambdasonde angeschlossenem Computer.

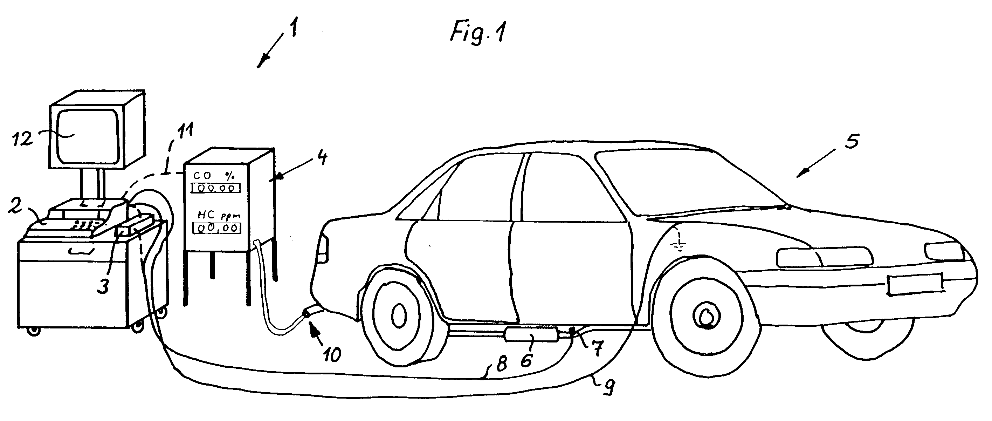

Eine in Fig. 1 gezeigte Meßeinrichtung 1 umfaßt im vorliegenden Falle einen Rechner 2, der selbst einen Speicher beinhaltet bzw. mit einem separaten Speicher 3 verbindbar ist, sowie einen Abgastester 4 zum Bestimmen des Kohlenmonoxid- und des Kohlenwasserstoff-Gehaltes in den Auspuffgasen. Der Rechner 2 oder der mit ihm verbindbare Datenspeicher 3 sind so ausgebildet, daß sie im Fahrzeug 5 betriebsbereit mitgeführt werden können.
Das Fahrzeug 5 ist mit einem Drei-Wege-Katalysator 6 und einer vor diesem im Auspuffrohr angeordneten Lambdasonde 7 ausgerüstet.
Mit dieser Meßeinrichtung besteht nun die Möglichkeit, Abgasuntersuchungen am Fahrzeug in der Kaltlaufphase im Stand, während der Fahrt unter Last und anschließend bei betriebswarmen Motor vornehmen zu können. Der zum Durchführen dieses Abgastestes notwendige Aufwand ist vergleichsweise gering, wobei insbesondere auch ein aufwendiger Rollenprüfstand entbehrlich ist.

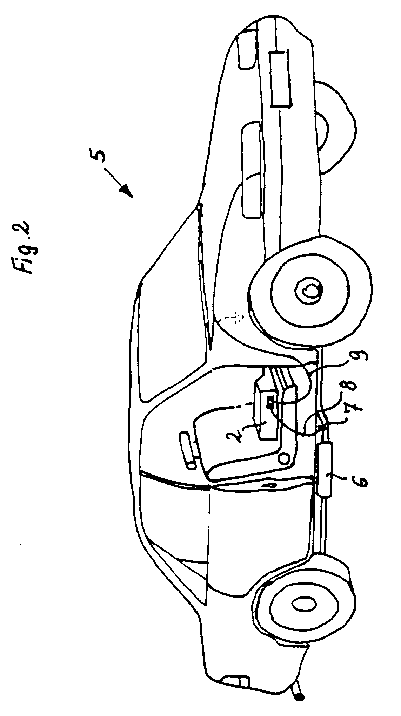

Zum Durchführen des Abgastestes wird zunächst der Rechner 2 an die Lambdasonde 7 angeschlossen und mit Fahrzeugmasse verbunden. Die Zuleitung zu der Lambdasonde ist in Figur 1 mit 8 und die Masseleitung mit 9 bezeichnet. Außerdem wird hinter dem Katalysator 6 beim Auspuffende der Abgastester 4 angeschlossen. Ab dem Starten des Motors in kaltem Zustand wird dann gleichzeitig der Kohlenmonoxid- und der Kohlenwasserstoff-Gehalt in den Ausfpuffgasen hinter dem Katalysator gemessen und außerdem wird die Zeit gemessen vom Kaltstart bis die Lambdasonde 7 arbeitet und auch die Zeit vom Kaltstart bis der Katalysator 6 arbeitet. Die vom Abgastester 4 angezeigten CO- und HC-Werte werden dann in den Rechner 2 übertragen. Hierbei besteht die Möglichkeit, daß die beim Abgastester 4 angezeigten Werte manuell über die Tastatur des Rechners übertragen und eingegeben werden oder daß der Abgastester 4 direkt über eine Leitung 11 mit dem Rechner 2 verbunden ist und über diese Leitung die Meßdaten überträgt.
Über den an den Rechner 2 angeschlossenen Monitor 12 können einerseits Meßdaten angezeigt und auch entsprechende Auswertungen dargestellt werden und andererseits ist hierüber auch auf einfache Weise eine Bedienerführung möglich.
Nach dem Kaltlauftest erfolgt der Fahrtest, wobei entweder der separate, in Fig. 1 strichliniert eingeschleift dargestellte Datenspeicher 3 oder der Rechner 2 insgesamt in das Fahrzeug 5 gestellt wird, wie dies in Fig. 2 dargestellt ist. Der Rechner 2 bzw. der Speicher 3 bleibt dabei einerseits mit der Lambdasonde 7 und andererseits mit Fahrzeugmasse verbunden. Der Abgastester 4 wird abgekuppelt. Während des Fahrtestes werden die von der Lambdasonde 7 kommenden Meßdaten in dem separaten Speicher 3 oder im Speicher des Rechners 2 abgelegt.
Erwähnt sei noch, daß während des Fahrbetriebes nach einem vorgegebenen Fahrmuster vorgegangen wird, wobei die zu fahrende Geschwindigkeit und die Prüfzeit und dgl. festgelegt sind. Darin eingeschlossen ist dann auch der Schiebebetrieb mitenthalten.

Nach dem Fahrtest wird, wie in Fig. 1 gezeigt und auch vergleichbar mit dem Kalttest, der Abgastester 4 wieder angeschlossen und die während des Fahrbetriebes gespeicherten Daten, falls diese im Datenspeicher 3 abgelegt wurden, in den Rechner 2 überspielt. Es folgt dann der Test bei betriebswarmem Motor, wobei durch den Abgastester 4 wiederum die Kohlenmonoxid- und die Kohlenwasserstoff-Anteile hinter dem Katalysator 6 und mit Hilfe des Rechners 2 die Meßwerte der Lambdasonde 7 erfaßt werden.

Die aus den drei Testphasen ermittelten Meßwerte werden nach Abschluß der Messungen im Rechner verarbeitet und dort insbesondere mit im Rechner eingegebenen Abgas-Kenndaten des Fahrzeuges 5 verglichen. Im Rechner sind vzw. dabei die Abgas-Kenndaten von den Fahrzeugen abgespeichert, die in dem jeweiligen Betrieb gewartet werden. Insbesondere bestehen die Abgas-Kenndaten aus den Typ-Prüf US FTP 75-Werten und auch den US FTP 75 US 83/87-Werten. Das Prüfergebnis kann auf dem Monitor 12 angezeigt und bedarfsweise auch über einen Drucker ausgegeben werden.
Erwähnt sei noch, daß die Abgasprüfung in jedem Raum oder im Freien bei Temperaturen von z. B. 10° bis 30° durchgeführt werden können. Es ist somit kein temperierter Raum erforderlich, so daß auch dadurch eine erhebliche Aufwandreduzierung vorhanden ist. Die Prüfzeit der Gesamtanalyse beschränkt sich auf etwa 10 bis 15 Minuten, wobei dies den Kalttest, den Leistungstest und den Heißtest umfaßt.
Mit Hilfe des erfindungsgemäßen Meßverfahrens läßt sich der Wirkungsgrad des Katalysators 6 sehr genau bestimmen, wobei Versuche gezeigt haben, daß das Meßergebnis in einem Toleranzbereich von ± 5 % liegt.
Erwähnt sei noch, daß die Sondenmeßleitung zwischen Speicher 3 bzw. Rechner 2 und der Lambdasonde 7 problemlos zusätzlich an diese angeschlossen werden kann, ohne daß dazu größere Manipulationen am Sondenkabel oder ein Trennen des vorhandenen Sondenkabels erforderlich sind.

Mit Hilfe der erfindungsgemäßen Meßanordnung und des Meßverfahrens läßt sich auch die Alterungsrate bzw. der effektive Wirkungsgrad des Katalysators ermitteln. Dazu wird im Stand bei Leerlaufdrehzahl, z. B. 1.000 Umdrehungen pro Minute, eine Abgasmessung mit dem Abgastester 4 und gleichzeitig eine Messung mit der Lambdasonde durchführen. Die Messungen werden bei erhöhter Drehzahl - jedoch ohne Last - und entsprechend höherem Abgasdurchsatz wiederholt. Die erhöhte Drehzahl kann hierbei z. B. 2.500 bis 3.000 Umdrehungen pro Minute betragen. Die Meßdaten werden in dem Rechner 2 verarbeitet und dabei der jeweilige Wirkungsgrad errechnet. Ergibt sich zwischen den beiden Messungen praktisch kein Wirkungsgrad-Unterschied, läßt dies den Rückschluß zu, daß der Katalysator (und auch der Motor) ordnungsgemäß arbeitet.
Ergeben sich innerhalb von vorgegebenen Grenzwerten Abweichungen, das heißt, die aus den Meßdaten errechneten Wirkungsrade weichen merkbar voneinander ab, wird unter Verwendung von im Rechner abgespeicherten Motorkenndaten, die insbesondere aus Lastmessungen ermittelt wurden, ein effektiver Wirkungsgrad errechnet. Dabei ergibt sich im Vergleich zu der gemessenen Wirkungsgrad-Verschlechterung bei z. B. 3.000 Umdrehungen pro Minute eine zusätzliche Reduzierung des Wirkungsgrades, der dann aber dem tatsächlichen Wirkungsgrad unter Lastbetrieb entspricht.
Es läßt sich somit durch einfache Messungen im Stand ermitteln, ob der eingesetzte Katalysator noch ordnungsgemäß arbeitet. Insbesondere kann damit überprüft werden, ob nach einer bestimmten Betriebszeit des Katalysators, entsprechend z. B. einer Fahrstrecke von 100.000 km, seine Beschichtung noch in Ordnung ist. Mit zunehmendem Alterungsgrad und abnehmender Beschichtung nimmt entsprechend auch der effektive Wirkungsgrad ab. Es kann somit auch überprüft werden, um welchen Betrag die Konvertierungsrate bzw. der Wirkungsgrad des Katalysators durch die Alterung abgenommen hat.

Bei dem vorbeschriebenen Meßablauf kann auch erkannt werden, ob die Einstellung des Motors insgesamt stimmt. Ergibt sich nämlich zwischen der Messung bei z. B. 1.000 Umdrehungen pro Minute und z. B. 3.000 Umdrehungen pro Minute ein Wirkungsgradunterschied, der vorgegebene Grenzwerte überschreitet, so kann gegebenenfalls zusätzlich auch eine Fehleinstellung vorliegen. Bei Überschreiten von bestimmten Grenzwerten bezüglich der Wirkungsgraddifferenz kann vom Rechner auch eine Motoranalyse durchgeführt und mögliche Fehler ausgegeben werden. Beispielsweise kann der CO-Gehalt vor dem Katalysator zu hoch oder zu tief sein, die Lambda-Regelung kann fehlen usw.
Durch den ausgegebenen Fehlerhinweis ist die Fehlersuche wesentlich vereinfacht.
Die Katalysator-Messung kann dann nach dem korrekten Einstellen des Motors und Beseitigen eines eventuell vorhandenen Fehlers wiederholt werden.

## Patentansprüche

1. Verfahren zum Messen von Abgaswerten bei Kraftfahrzeugen mit geregeltem Drei-Wege-Katalysator (6) und Lambdasonde (7), **dadurch gekennzeichnet,** daß die von der Lambdasonde (7) kommenden Meßwerte zumindest während eines Fahrzyklus in einem Datenspeicher (2,3) abgespeichert werden und daß anschließend diese Daten zusammen mit weiteren, hinter dem Katalysator (6) gemessenen Abgas-Daten mit in einem Rechner (2) abgelegten Abgas-Kenndaten des Fahrzeuges verglichen werden.

2. Verfahren nach Anspruch 1, dadurch gekennzeichnet, daß die Meßwerte der Lambdasonde (7) während des Fahrbetriebes des Fahrzeuges über eine Zeit von wenigstens zwei bis vier Minuten eingespeichert werden.

3. Verfahren nach Anspruch 1 oder 2, dadurch gekennzeichnet, daß zunächst - mit einem Abgas-Tester (4) - der Kohlenmonoxidgehalt, Co, sowie der Kohlenwasserstoffgehalt, HC, gemessen werden, daß anschließend die dadurch ermittelten Meßdaten in den die Abgas-Kenndaten, insbesondere gemäß dem Typ-Prüf-US FTP-75-Werten enthaltenden Rechner (2) eingegeben werden und daß schließlich diese Abgas-Meßdaten sowie die von der Lambdasonde (7) gelieferten Meßdaten mit den Abgas-Kenndaten verglichen werden und die Abweichungen auf einen Datenträger übertragen, angezeigt und/oder ausgedruckt werden.

4. Verfahren nach einem der Ansprüche 1 bis 3, dadurch gekennzeichnet, daß vor der Abgasmessung die Umgebungstemperatur und anhand der Meßdaten der Lambdasonde (7) die Zeit vom Kaltstart bis zum Arbeiten der Lambdasonde sowie bis zum Arbeiten des Katalysators (6) gemessen werden und in den Rechner zur Verarbeitung mit den anderen Meßdaten sowie den Abgaskenndaten eingegeben werden.

5. Verfahren nach einem der Ansprüche 1 bis 4, dadurch gekennzeichnet, daß eine Abgasmessung und eine Messung mit der Lambdasonde (7) bei Leerlaufdrehzahl mit ca. 1.000 Umdrehungen pro Minute, anschließend diese Messungen bei erhöhter Drehzahl von ca. 3.000 Umdrehungen pro Minute ohne Last durchgeführt wird und daß dann aus diesen Meßwerten zusammen mit fest vorgegebenen, motoren-typischen Lastmeßwerten der effektive Wirkungsgrad des Katalysators (6) errechnet wird.

6. Vorrichtung zur Abgasmessung an Kraftfahrzeugen mit geregelten Drei-Wege-Katalysator (6) und Lamdasonde (7), insbesondere zum überprüfen des Katalysator-Wirkungsgrades, zum Durchführen des Verfahrens nach einem der Ansprüche 1 bis 5, dadurch gekennzeichnet, daß sie wenigstens einen während der Messung an die Lamdasonde (7) angeschlossenen Datenspeicher (3) sowie einen mit diesem verbundenen oder verbindbaren Rechner (2) mit darin eingespeicherten, typgebundenen Abgas-Kenndaten aufweist und daß ihr ein an sich bekannter Abgastester (4) zur Messung des Kohlenmonoxid- und des Kohlenwasserstoff-Gehaltes zugeordnet ist.

7. Vorrichtung nach Anspruch 6, dadurch gekennzeichnet, daß der Datenspeicher (3) als mobiler, im Fahrzeug mitführbarer und - nach dem Fahrtest - mit dem Rechner verbindbarer Speicher ausgebildet ist, der eine Verbindungskupplung zum lösbaren Anschließen insbesondere an einen stationären Rechner aufweist.

8. Vorrichtung nach Anspruch 6, dadurch gekennzeichnet, daß der Rechner (2) und der Datenspeicher (3) als Einheit ausgebildet sind und daß diese betriebsbereit im Auto mitführbar ist.

9. Vorrichtung nach einem der Ansprüche 6 bis 8, dadurch gekennzeichnet, daß der Abgastester (4) direkt elektrisch mit dem Rechner verbunden ist.

## Claims

1. An exhaust gas measuring procedure for motor vehicles having a computer controlled three-way catalytic converter (6) and lambda probe (7) **characterized in** **that** at least during a driving cycle the measured values coming from the lambda probe (7) are stored in a data memory or storage (2, 3), and that subsequently said data, together with further exhaust gas data measured after the catalytic converter (6), are compared with computer(2)-stored exhaust gas characteristic data of the vehicle.

2. A procedure as claimed in claim 1, characterized by storing the measured values of the lambda probe (7) during the driving mode of the vehicle over a time of at least two to four minutes.

3. A procedure as claimed in claim 1 or claim 2, characterized in that first the carbon monoxide content, Co, as well as the hydrocarbon content, HC, is measured with an exhaust gas tester (4), that then the measured data thereby determined are entered in the computer (2) holding the exhaust gas characteristic data, particularly according to type test US FTP 75 values, and that finally said exhaust gas measured data as well as the measured data supplied by the lambda probe (7) are compared with the exhaust gas characteristic data and the deviations are transferred to a data carrier, displayed and/or printed out.

4. A procedure as claimed in any one of claims 1 to 3, characterized in that, prior to the exhaust gas measurement, the ambient temperature and, by means of the measured data of the lambda probe (7), the time from the cold start till the lambda probe operates and till the catalytic converter (6) operates are measured and entered in the computer for processing with the other measured data as well as with the exhaust gas characteristic data.

5. A procedure as claimed in any one of claims 1 to 4, characterized by carrying out an exhaust gas measurement and a measurement with the lambda probe (7) at idling speed with about 1000 r.p.m., by then carrying out said measurements at increased speed of about 3000 r.p.m. without load, and then calculating the actual efficiency of the catalytic converter (6) from said measured vales together with preset load values representative of the engine.

6. An exhaust gas measuring device for vehicles having a computer-controlled three-way catalytic converter (6) and lambda probe (7), particularly to check the efficiency of the catalytic converter, to carry out the procedure as claimed in any one of claims 1 to 5, characterized in that said device has at least one data storage (3) connected to the lambda probe (7) during the measurement, as well as connected or connectable to said data storage a computer (2) with type-dependent exhaust gas characteristic data stored therein, and that associated with said device is an exhaust gas tester (4), known per se, to measure the carbon monoxide or hydrocarbon content.

7. A device as claimed in claim 6, characterized in that the data storage (3) takes the form of a mobile storage which can be carried in the vehicle and - after the test in the driving mode - is connectable to the computer and has a coupler for being detachably connected particularly to a stationary computer.

8. A device as claimed in claim 6, characterized in that the computer (2) and the data memory (3) take the form of a unit and that the same can be carried ready for operation in the car.

9. A device as claimed in any one of claims 6 to 8, characterized in that the exhaust gas tester (4) is electrically connected to the computer direct.

## Revendications

1. Procédé pour mesurer des valeurs de gaz d'échappement sur des véhicules munis d'un convertisseur catalytique à trois voies asservi (6) et d'une sonde lambda (7), caractérisé en ce que les valeurs de mesure provenant de la sonde lambda (7) sont stockées dans une mémoire (2, 3), au moins pendant un trajet complet et en ce qu'ensuite ces données, ainsi que d'autres données de gaz d'échappement mesurées à l'arrière du convertisseur catalytique (6), sont comparées aux données caractéristiques des gaz d'échappement du véhicule qui sont stockées dans un ordinateur (2).

2. Procédé selon la revendication 1, caractérisé en ce que les valeurs mesurées par la sonde larnbda (7) pendant que le véhicule roule sont enregistrées sur une durée d'au moins deux à quatre minutes.

3. Procédé selon la revendication 1 ou 2, caractérisé en ce que, dans un premier temps, on mesure à l'aide d'un analyseur des gaz d'échappement (4) la teneur en monoxyde de carbone, CO, et la teneur en hydrocarbure, HC, en ce qu'ensuite les données de mesures ainsi obtenues sont introduites dans l'ordinateur (2) contenant les données caractéristiques des gaz d'échappement, notamment celles conformes aux valeurs d'homologation US FTP 75, et en ce qu'enfin ces données de mesure des gaz d'échappement et les données de mesure fournies par la sonde lambda (7) sont comparées aux données de mesure caractéristiques des gaz d'échappement et les écarts, transmis, affichés et/ou imprimés sur un support de données.

4. Procédé selon l'une des revendications 1 à 3, caractérisé en ce que, avant de mesurer les gaz d'échappement, on mesure la température ambiante et, à l'aide des données de mesure de la sonde lambda (7), la durée depuis le départ à froid jusqu'à ce que la sonde lambda se mette à fonctionner et jusqu'à ce que le convertisseur catalytique (6) se mette à fonctionner, et on introduit ces données dans l'ordinateur pour qu'elles y soient traitées avec les autres données de mesure et les données caractéristiques des gaz d'échappement.

5. Procédé selon l'une des revendications 1 à 4, caractérisé en ce qu'on effectue une mesure des gaz d'échappement et une mesure à l'aide de la sonde lambda (7) pour un ralenti à vide d'environ 1 000 tours par minute, puis pour un régime supérieur d'environ 3 000 tours par minute sans charge, et en ce qu'on calcule ensuite le degré d'efficacité effectif du convertisseur catalytique (6) à partir de ces valeurs de mesure et de valeurs de mesure de charge propres à chaque type de moteur qui sont préalablement définies.

6. Dispositif pour mesurer les gaz d'échappement de véhicules munis d'un convertisseur catalytique à trois voies asservi (6) et d'une sonde lambda (7), notamment pour vérifier le degré d'efficacité du convertisseur catalytique, pour mettre en oeuvre le procédé selon l'une des revendications 1 à 5, caractérisé en ce qu'il présente au moins une mémoire (3) raccordée à la sonde lambda (7) pendant la prise de mesures et un ordinateur (2) relié ou pouvant être relié à la mémoire dans lequel sont stockées des données caractéristiques de gaz d'échappement propres à chaque type de moteur et en ce qu'un analyseur de gaz d'échappement (4) connu en soi pour mesurer la teneur en monoxyde de carbone et en hydrocarbure est associé à ce dispositif.

7. Dispositif selon la revendication 6, caractérisé en ce que la mémoire (3) est réalisée sous forme de mémoire mobile pouvant être transportée dans le véhicule même et pouvant être reliée à l'ordinateur après l'analyse en marche, et présentant un prolongateur pour être raccordée de manière amovible, notamment à un ordinateur fixe.

8. Dispositif selon la revendication 6, caractérisé en ce que l'ordinateur (2) et la mémoire (3) sont réalisés sous forme d'unité et en ce que cette dernière peut être transportée dans le véhicule en état de fonctionnement.

9. Dispositif selon l'une des revendications 6 à 8, caractérisé en ce que l'analyseur des gaz d'échappement (4) est relié directement à l'ordinateur par le circuit électrique.
